# EUROPÄISCHE PATENTSCHRIFT

(11) **EP 1 695 612 B1**
(45) Veröffentlichungstag und Bekanntmachung des Hinweises auf die Patenterteilung: **08.05.2019**
(21) Anmeldenummer: 06101661.4
(22) Anmeldetag: 14.02.2006
(51) Int. Cl.: A01B 71/04, A01B 71/08, F16C 33/76, A01F 15/18, A01D 75/18, A01D 69/12

(54) **Lagerung eines Gutförder- und/oder Gutbearbeitungselements für eine Erntemaschine**
Bearing of a crop transport and/or treatment device for a harvester
Palier d'un dispositif de transport et/ou de traitement pour une récolteuse

(30) Priorität: 24.02.2005 DE 102005008448; 19.10.2005 US 253345
(43) Veröffentlichungstag der Anmeldung: 30.08.2006
(73) Patentinhaber: Deere & Company, Moline, IL 61265 (US)
(72) Erfinder: Vogelgesang, Claus-Joseph, 66399 Mandelbachtal (DE); Engel, Manfred, 66484 Großsteinhausen (DE); Teijido, Joseph A., East Moline, IL 61244 (US); Elsner, Dr., Wolfram, 70736 Fellbach (DE); Schäfer, Rainer, 66482 Zweibrücken (DE); Lauer, Fritz, 66894 Krähenberg (DE); Bacon, Joshua D., Tulare, CA 93274 (US)
(74) Vertreter: Holst, Sönke

(56) Entgegenhaltungen:
- WO-A-03/025436
- BE-A3- 1 011 973
- DE-A1- 2 322 458
- DE-A1- 4 138 857
- US-A- 2 014 859
- US-A- 3 799 634
- US-A- 5 347 801
- US-A- 5 378 000

## Beschreibung

Die Erfindung betrifft eine Lageranordnung eines Gutförder- und/oder Gutbearbeitungselements für eine Erntemaschine, mit einer mit dem Gutförder- und/oder Gutbearbeitungselement verbundenen, angetriebenen oder frei mitlaufenden Welle, einem die Welle am Fahrgestell der Erntemaschine abstützenden Lager, das durch eine berührungslose Dichtung, die ein erstes, sich mit der Welle bewegendes Element und ein zweites, mit dem Fahrgestell der Erntemaschine verbundenes Element umfasst, deren einander benachbarte Flächen einen sich in axialer Richtung der Welle erstreckenden Spalt bilden, gegenüber dem vom Gutförder- und/oder Gutbearbeitungselement geförderten und/oder bearbeiteten Erntegut abgeschirmt ist.

### Stand der Technik

In der DE 101 15 331 A wird eine Lageranordnung beschrieben, bei der die rotierende Welle einer Erntegutbearbeitungseinrichtung durch ein Wälzlager am Rahmen einer Erntemaschine abgestützt wird. Eine erste, als Dichtung dienende Scheibe ist stationär mit der Seitenwand eines Förderkanals der Erntemaschine verbunden und schließt mit der Welle einen relativ engen Spalt ein. Eine zweite, ebenfalls als Dichtung dienende Scheibe dreht sich mit der Welle. Die zweite Scheibe befindet sich zwischen der ersten Scheibe und dem an der Außenseite der Seitenwand angeordneten Wälzlager. Durch die Scheiben und eine Dichtung mit flexiblen Lippen, die an einem mit der Welle rotierenden Kugellaufring des Wälzlagers anliegen, soll das Wälzlager vor eindringendem Fremdmaterial, insbesondere Pflanzensäften, geschützt werden.

Eine andere Lageranordnung wird in der DE 195 48 636 A beschrieben. Die Welle ist mit Gewinden ausgestattet, die im Zusammenwirken mit stationären Töpfen die Pflanzensäfte nach außen abführen und eine Beschädigung des Wälzlagers verhindern sollen.

Die DE 35 16 131 A beschreibt eine weitere Lageranordnung mit an der Außenseite der Seitenwand eines Förderkanals angeordneten Wälzlagern, die durch eine Labyrinthdichtung, deren mit der Welle verbundener Teil als Schleuderscheibe ausgeführt sind, gegen eindringende Pflanzensäfte geschützt werden. Das Labyrinth erstreckt sich in radialer Richtung.

Weiterhin wird in der US 5 603 206 A eine Lageranordnung mit einer stationären Achse vorgeschlagen, die sich im Innenraum einer rotierenden Walze erstreckt. Ein Wälzlager im Inneren der Walze stützt die Walze drehbar auf der Achse ab. Eine Dichtungsscheibe ist mit der Walze verbunden und dichtet im Zusammenwirken mit einer mit der Achse verbundenen Scheibe das Wälzlager nach außen hin ab.

Die EP 0 920 799 A schlägt eine Lageranordnung für eine angetriebene Walze vor, bei der sich das Wälzlager in einer Öffnung der Seitenwand des Pressraums einer Ballenpresse befindet und eine die Öffnung durchdringende Welle abstützt. Die Abdichtung des Wälzlagers erfolgt durch mit der Walze rotierende, flexible radiale Dichtungslippen, die an einem an der Innenseite der Seitenwand befestigten, sich axial erstreckenden Ring anliegen.

Die DE 41 38 857 A beschreibt eine Lageranordnung für eine Landmaschine, bei der ein sich radial erstreckender Kragen mit einer Welle verbunden ist. An der Innenfläche des Kragens ist ein stationäres Lagergehäuse vorgesehen, das mit dem Kragen einen Dichtspalt bildet und verhindern soll, dass das Lager der Welle durch Erntematerial verunreinigt wird.

Die als gattungsbildend angesehene US 2 014 859 A beschreibt eine weitere Lageranordnung, bei der eine rotierende Welle mit einer sich axial erstreckenden, mittleren Hülse ausgestattet ist. An der Innenseite der mittleren Hülse ist eine stationäre, innere Hülse vorgesehen, die mit der rotierenden, mittleren Hülse einen sich axial erstreckenden Dichtspalt bildet. Eine äußere Hülse ist ebenfalls stationär angeordnet und umschließt die mittlere Hülse, so dass sich dazwischen ein weiterer, sich axial erstreckender Dichtspalt für eine Lagerung der Welle bildet.

In der US 3 799 634 A wird eine weitere Dichtungsanordnung beschrieben, die einen sich schräg nach außen orientierten Spalt zwischen einem äußeren, rotierenden Element und einem inneren, stehenden Element umfasst.

### Aufgabe der Erfindung

Das der Erfindung zu Grunde liegende Problem wird darin gesehen, eine Lagerung eines Gutförder- und/oder Gutbearbeitungselements einer Erntemaschine dahingehend zu verbessern, dass ein Eindringen von Pflanzensäften in das eigentliche Lager erschwert wird.

### Lösung

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Lageranordnung eines Gutförder- und/oder Gutbearbeitungselements für eine Erntemaschine ist mit einer mit dem Gutförder- und/oder Gutbearbeitungselement verbundenen, angetriebenen oder frei mitlaufenden Welle und einem die Welle am Fahrgestell der Erntemaschine abstützenden Lager, das durch eine berührungslose, ein Labyrinth bildende Dichtung gegenüber dem vom Gutförder- und/oder Gutbearbeitungselement geförderten und/oder bearbeiteten Erntegut abgeschirmt ist, ausgestattet. Die Dichtung weist ein erstes, sich mit der Welle bewegendes Element und ein zweites, mit dem Fahrgestell der Erntemaschine verbundenes Element auf, deren einander benachbarte Flächen einen sich in axialer Richtung der Welle orientierten, ersten Spalt bilden, der ein dem Lager zugewandtes, einlaufseitiges Ende und ein vom Lager beabstandetes Ende aufweist. Das erste Element umschließt das zweite Element konzentrisch und schließt an seiner dem Lager zugewandten Stirnseite mit einer das zweite Element radial nach außen verlängernden Fläche einen radial verlaufenden, zweiten Dichtspalt ein, der sich an das einlaufseitige Ende des Spalts anschließt. Radial außerhalb des radial verlaufenden, zweiten Dichtspalts ist am zweiten Element ein drittes, mit dem Fahrgestell der Erntemaschine verbundenes Element angebracht, das sich an der Außenseite des ersten Elements in axialer Richtung erstreckt. Die dem ersten Element zugewandte Fläche des dritten Elements erstreckt sich vom zweiten Dichtspalt schräg nach außen und das dritte Element bildet mit einer parallel und ebenfalls schräg nach außen verlaufenden Fläche des ersten Elements einen weiteren berührungslosen Dichtspalt, der sich an den radial verlaufenden Dichtspalt anschließt und schräg nach außen verläuft.

Es wird eine Einbaumöglichkeit für weitere Dichtungen zwischen dem zweiten Element und der Welle bereitgestellt, insbesondere mit flexiblen Dichtelementen, die am zweiten Element innenseitig befestigt sind und an der Welle reibend oder gleitend anliegen.

Bei einer bevorzugten Ausführungsform der Erfindung ist das Lager an der Außenseite einer Wand angeordnet, in der sich eine von der Welle durchdrungene Öffnung befindet, während das Gutförder- und/oder Gutbearbeitungselement an der Innenseite der Wand positioniert ist. Das zweite Element der Dichtung kann dann konzentrisch zur Öffnung angeordnet werden.

Weiterhin ist sinnvoll, dass das dritte, mit dem Fahrgestell der Erntemaschine verbundene Element das erste Element wenigstens über einen Teil der Länge des ersten Elements radial umschließt, so dass sich ein bogenförmiger Einlauf des Spalts ergibt. Im Einlauf des Spalts kann eine berührungsfreie Labyrinthdichtung angeordnet sein.

Die Erfindung eignet sich für alle Gutförder- und/oder Gutbearbeitungselemente von (selbst fahrenden oder angebauten bzw. gezogenen) Erntemaschinen, auch von Erntevorsätzen. Sie kann insbesondere bei Feldhäckslern zur Anwendung kommen, mit denen häufig Pflanzen
geerntet werden, aus denen Säfte austreten, die geeignet sind, Lagerungen zu beschädigen. Die Lagerung kann für Einzugswalzen, Häckseltrommeln, Walzen von Nachzerkleinerungsvorrichtungen oder Fördervorrichtungen (Gebläse) verwendet werden.

### Ausführunqsbeispiel

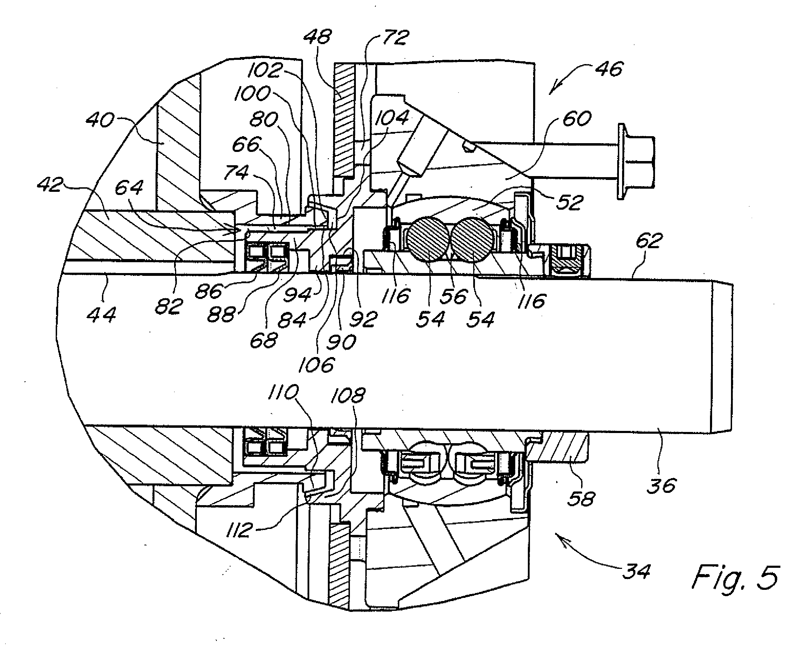

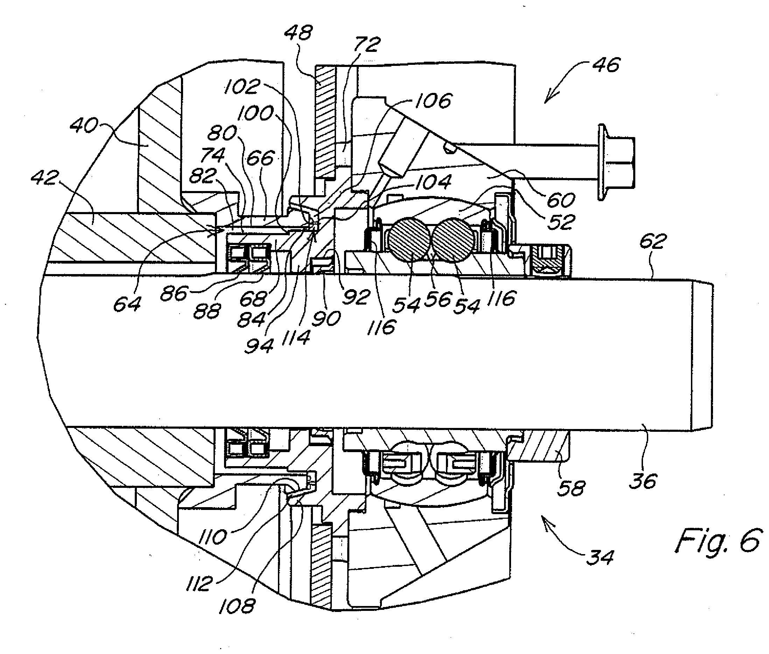

In den Zeichnungen sind vier nachfolgend näher beschriebene Beispiele, nach-genannt Ausführungsformen, dargestellt, von denen nur jene nach den Figuren 5 und 6 anspruchsgemäß sind. Es zeigt:
- Fig. 1: eine Erntemaschine in Seitenansicht und in schematischer Darstellung,
- Fig. 2: eine Querschnittsansicht einer ersten Ausführungsform einer Lageranordnung,
- Fig. 3: eine perspektivische Ansicht des ersten Elements der Labyrinthdichtung der Lageranordnung aus Figur 2,
- Fig. 4: eine Querschnittsansicht einer zweiten Ausführungsform einer Lageranordnung,
- Fig. 5: eine Querschnittsansicht einer dritten Ausführungsform einer Lageranordnung, und
- Fig. 6: eine Querschnittsansicht einer vierten Ausführungsform einer Lageranordnung.

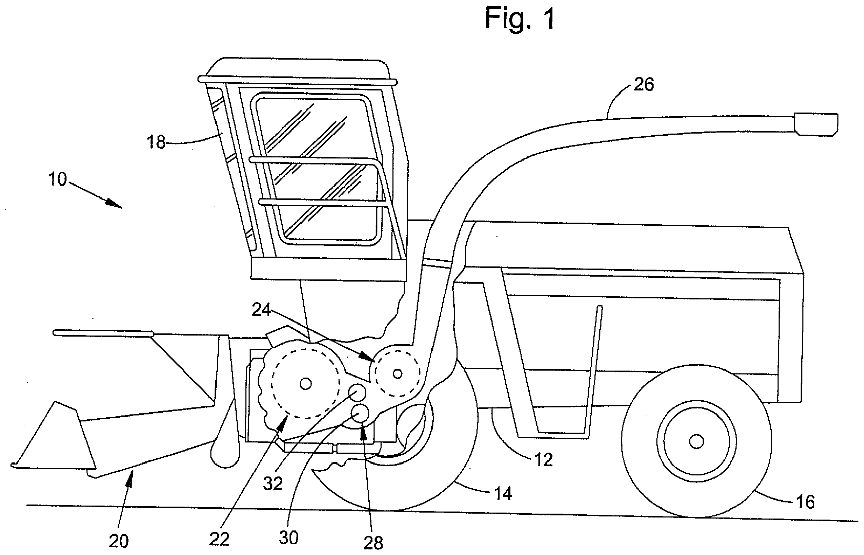

Eine in der Figur 1 gezeigte Erntemaschine 10 in der Art eines selbst fahrenden Feldhäckslers baut sich auf einem Fahrgestell 12 auf, das von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 in Form eines Maisgebisses einsehbar ist. Mittels der Erntegutaufnahmevorrichtung 20 vom Boden aufgenommenes Gut, z. B. Mais, Gras oder dergleichen, wird einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird. Die Nachzerkleinerungsvorrichtung 28 weist zwei als Walzen ausgeführte Gutförder- und/oder Gutbearbeitungselemente 30, 32 auf, die gegensinnig in Drehung versetzt werden.

Ein potentielles Problem der Nachzerkleinerungseinrichtung 28 und auch der anderen Gutförder- und/oder Gutbearbeitungselemente der Erntemaschine 10, beispielsweise der Fördereinrichtung 24 und der nicht eingezeichneten Einzugswalzen, die der Häckseltrommel 22 vorgeordnet sind, besteht darin, dass bei der Förderung bzw. Bearbeitung des Ernteguts Pflanzensäfte anfallen, die in die Lagerungen der Gutförder- und/oder Gutbearbeitungselemente eindringen und sie durch Korrosion zerstören können.

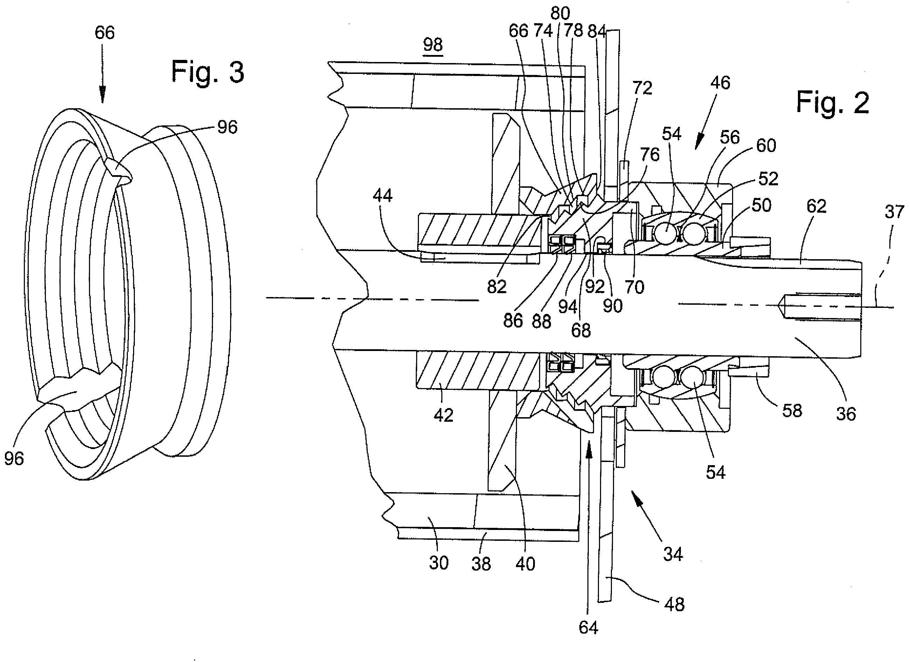

Um das Eindringen von Pflanzensäften in die Wälzlager zu verhindern, ist das untere Gutförder- und/oder Gutbearbeitungselement 30 der Nachzerkleinerungsvorrichtung 28 mit einer Lageranordnung 34 ausgestattet, die in der Figur 2 detaillierter dargestellt ist. Auch das zweite, in der Figur 2 nicht gezeigte Ende des Gutförder- und/oder Gutbearbeitungselements 30 sowie das obere Gutförder- und/oder Gutbearbeitungselement 32 kann mit einer derartigen Lageranordnung 34 versehen sein.

Das Gutförder- und/oder Gutbearbeitungselement 30 weist einen Mantel 38 auf, in den eine endseitige, in axialer Richtung gegenüber dem äußeren Ende des Mantels 38 nach innen versetzte Stützscheibe 40 eingesetzt ist. Die Stützscheibe 40 ist über einen Ring 42 mit einer sich über die gesamte Breite des Gutförder- und/oder Gutbearbeitungselementes 30 erstreckenden Welle 36 verbunden, die auch als Wellenstummel ausgeführt sein und am Ring 42 enden könnte. Die Welle 36 ist durch eine Passfederverbindung 44 mit dem Ring 42 verbunden oder auf eine beliebige andere Weise daran befestigt.

Die Welle 36 ist durch ein als Wälzlager ausgeführtes Lager 46 mit einer seitlichen Wand 48 verbunden, die sich wiederum direkt oder indirekt am Fahrgestell 12 abstützt. Das Lager 46 weist einen inneren Kugellaufring 50, der auf die Welle 36 aufgesetzt ist, und einen äußeren Kugellaufring 52 auf, der den inneren Kugellaufring 50 umschließt. Zwischen dem inneren Kugellaufring 50 und dem äußeren Kugellaufring 52 sind als Wälzlager eine Reihe Kugeln 54 angeordnet, die durch Käfige 56 gehaltert sind und in entsprechenden, abgerundeten Laufbahnen der Kugellaufringe 50, 52 abrollen. In axialer Richtung sind zwei Reihen von Kugeln 54 hintereinander angeordnet. Der innere Kugellaufring 50 ist durch eine Klemmscheibe 58 auf der Welle 36 befestigt. Der über die Klemmscheibe 58 in der Zeichnung nach rechts hinausragende Teil der Welle 36 kann auch zur Befestigung einer Riemenscheibe oder eines anderen Antriebsmittels dienen, wozu eine endseitige Nut 62 vorgesehen ist. In einer anderen Ausführungsform ist die Welle 36 nicht angetrieben, d. h. das zugehörige Gutförder- und/oder Gutbearbeitungselement läuft frei mit dem sich bewegenden Erntegut mit. Der äußere Kugellaufring 52 wird durch ein Lagergehäuse 60 radial umschlossen, das seinerseits an der Wand 48 des Gutförderkanals 98 der Erntemaschine 10 befestigt ist.

Um die Lebensdauer des Lagers 46 durch eine Abdichtung gegenüber Pflanzensäften, die an der Innenseite der Wand 48 im Gutförderkanal 98 der Erntemaschine vorhanden sein können, zu verbessern, ist eine berührungslose, labyrinthförmige Dichtung 64 an der Innenseite der Wand 48 vorgesehen. Die Dichtung 64 wird teilweise innerhalb des Raums aufgenommen, der durch die gegenüber dem äußeren Ende des Mantels 38 nach innen versetzte Anordnung der Stützscheibe 40 freigeworden ist. Die Dichtung 64 setzt sich aus einem ersten Element 66 und einem zweiten Element 68 zusammen, die beide im Wesentlichen rotationssymmetrisch sind.

Das erste Element 66 umschließt den axial äußeren Endbereich des Rings 42 und ist daran insbesondere durch zusammenpassende Gewinde fixiert oder angeschweißt. Das erste Element 66 könnte auch direkt an der Welle 36 oder an der Stützscheibe 40 befestigt sein, insbesondere daran angeschweißt. An seinem in der Figur 2 links eingezeichneten Ende liegt es weiterhin an der Stützscheibe 40 an. Das zweite Element 68 erstreckt sich in den Innenraum des ersten Elements 66. Das zweite Element 68 umfasst einen sich auf die Außenseite der Wand 48 erstreckenden Bereich 70, der sich in eine komplementäre Ausnehmung des Lagergehäuses 60 erstreckt und der mit einer den Bereich 70 umschließenden Halteplatte 72 verschweißt ist, die wiederum an der Wand 48 angeschraubt ist. Demnach durchdringt das zweite Element 68 eine zur Welle 36 konzentrische Öffnung in der Wand 48, durch die sich auch die Welle 36 erstreckt. Das Lagergehäuse 60 ist auf den Bereich 70 aufgeschraubt. Es wären auch beliebige andere Befestigungsmöglichkeiten zur Anbringung des zweiten Elements 68 und des Lagergehäuses 60 an der Wand 48 denkbar, wie Löt-, Schweiß-, Klebe- oder Schraubverbindungen.

Das zweite Element 68 umschließt die Welle 36 konzentrisch und wird konzentrisch vom ersten Element 66 umschlossen. Zwischen dem ersten Element 66 und dem zweiten Element 68 der Dichtung 64 ist ein im dargestellten Querschnitt zickzackförmiger (Labyrinth-) Spalt 74 gebildet, der in radialer Richtung nach innen durch ein sägezahnförmiges Profil 76 des zweiten Elements 68 und in radialer Richtung nach außen durch ein Profil des ersten Elements 66 begrenzt wird, das sich aus radialen Flächen 78 und konischen Flächen 80 zusammensetzt, die in axialer Richtung alternierend aufeinander folgen. Die Mitten der radialen Flächen 78 liegen jeweils den Spitzen des Profils 76 gegenüber. Der Spalt 74 erweitert sich von seinem in der Figur 2 links eingezeichneten Ende 82 sukzessive konisch zu seinem dort rechts eingezeichneten Ende 84.

Zwischen dem zweiten Element 68 und der Welle 36 sind am vom Lager 46 beabstandeten Ende des zweiten Elements 68 zwei weitere Dichtungen 86, 88 axial aufeinander folgend angeordnet. Die weiteren Dichtungen 86, 88 sind jeweils am zweiten Element 68 befestigt und weisen flexible, lippenförmige Dichtelemente auf, die an der Welle 36 anliegen. Eine dritte Dichtung 90 ist an der Welle 36 befestigt und weist ein in einer Ausnehmung 92 des zweiten Elements 68 anliegendes, flexibles Dichtelement auf. Die dritte Dichtung 90 ist dem Lager 46 benachbart. Zwischen den weiteren Dichtungen 86, 88 und der dritten Dichtung 90 weist das zweite Element 68 einen radial nach innen gerichteten Vorsprung 94 auf, der mit der Welle 36 einen relativ kleinen Spalt einschließt.

Anhand der in Figur 3 gezeigten perspektivischen Darstellung des ersten Elements 66 ist erkennbar, dass an seiner Innenseite zwei um 180° versetzte Rinnen 96 vorhanden sind.

Beim Betrieb hindert die Dichtung 64 im Gutförderkanal 98 vorhandene oder frei werdende Pflanzensäfte daran, zum links eingezeichneten Ende 82 des Spalts 74 zu gelangen. Eventuell doch dort hingelangende Pflanzensäfte werden durch die Fliehkraft und/oder Oberflächenadhäsion an die Flächen 78 und 80 gelangen und dort durch die am rotierenden ersten Element 66 wirkende Fliehkraft in Richtung des sich sukzessive erweiternden Innendurchmessers des ersten Elements 66 entlang der Flächen 78 und 80 und in den Rinnen 96 nach außen, d. h. zum rechts eingezeichneten Ende 84 des Spalts 74 geleitet. Dort werden sie nach außen abgeschleudert.

Am Ende 82 des Spalts 74 könnten dennoch Pflanzensäfte auftreten, wenn auch in geringen Mengen. Da dieses Ende 82 relativ weit vom Lager 46 beabstandet ist, wird durch den somit ermöglichten Einbau der weiteren Dichtungen 86, 88 und der dritten Dichtung 90 ein Vordringen der Pflanzensäfte zum Lager hin vermieden.

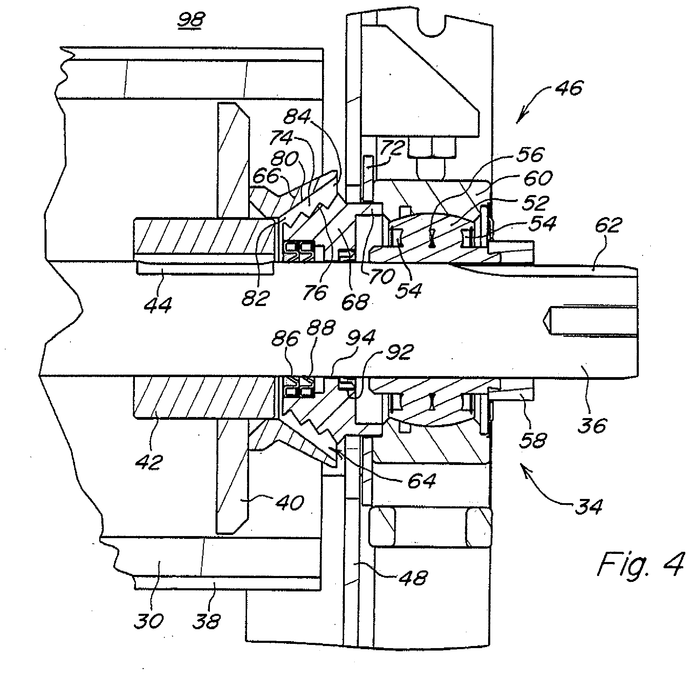

Die Figur 4 zeigt eine Querschnittszeichnung durch eine zweite Ausführungsform einer Lageranordnung 34. Mit der ersten Ausführungsform übereinstimmende Elemente sind mit denselben Bezugszeichen gekennzeichnet. Der wesentliche Unterschied zur ersten Ausführungsform liegt darin, dass das erste Element 66 innenseitig glatt ist. Dadurch können Pflanzensäfte leicht nach außen (in der Figur 4 nach rechts) abfließen. Das erste Element 66 kann auch in der zweiten Ausführungsform an seiner Innenseite mit zwei um 180° versetzten Rinnen 96 (analog Figur 3) ausgestattet sein. Es wäre auch denkbar, nur das zweite Element 68 (oder beide Elemente 66, 68) innenseitig glatt zu gestalten.

Eine dritte Ausführungsform einer erfindungsgemäßen Lageranordnung 34 ist in der Figur 5 dargestellt. Mit der ersten und zweiten Ausführungsform übereinstimmende Elemente sind mit denselben Bezugszeichen gekennzeichnet. Der grundlegende Unterschied zu den zuvor diskutierten Ausführungsformen liegt in der Orientierung der berührungslosen Dichtung 64, deren Spalt 74 sich hier genau in radialer Richtung erstreckt. Die Innenseite des ersten Elements 66 und die Außenseite des zweiten Elements 68 sind hier glatt, wobei das zweite Element 68 in der Nähe des rechts eingezeichneten Endes 84 der Dichtung 64, d. h. eingangsseitig, eine kleine radiale Stufe 100 ausbildet. Das erste Element 66 schließt an seiner (rechts eingezeichneten) Stirnseite 102 mit einer das zweite Element 68 radial nach außen verlängernden Fläche 104 einen radial verlaufenden Dichtspalt 106 ein, der sich an das einlaufseitige Ende 84 des Spalts 74 anschließt.

Radial außerhalb des radial verlaufenden Dichtspalts 106 ist am zweiten Element 68 ein (über das zweite Element 68 mit dem Fahrgestell 12 verbundenes, d. h. sich nicht mit dem ersten Element 66 drehendes) drittes Element 108 angebracht, das sich an der Außenseite des ersten Elements 66 wieder in axialer Richtung schräg nach außen erstreckt. Anders als in der dargestellten Ausführungsform, in der das zweite Element 68 und das dritte Element 108 einteilig hergestellt sind, könnten sie auch zweiteilig ausgeführt sein. Mit einer parallel, d.h. ebenfalls schräg nach außen verlaufenden Fläche 110 des ersten Elements 66 bildet das dritte Element 108 einen weiteren berührungslosen Dichtspalt 112, der sich an den radial verlaufenden Dichtspalt 106 anschließt und schräg nach außen verläuft. Verunreinigungen müssten demnach am Einlauf der Dichtung 64 eine U-förmige Bahn durch die Dichtspalte 112, 106 und den berührungslosen Spalt 74 nehmen, um zum Ende 82 der Dichtung 64 und vor die Dichtung 86 zu gelangen, was relativ unwahrscheinlich ist. Ein Vorteil der dritten Ausführungsform gegenüber den zuvor dargestellten Ausführungsformen liegt in der größeren Achsnähe des Spalts 74, die wegen den geringeren zu erwartenden Verformungen beim Schweißen geringere Spaltdurchmesser in der Dichtung 64 erlaubt.

Weiterhin sind in der dritten Ausführungsform noch Dichtungen 116 an beiden Seiten der Kugeln 54 angeordnet.

Eine vierte Ausführungsform einer erfindungsgemäßen Lageranordnung 34 ist in der Figur 6 dargestellt. Mit der dritten Ausführungsform übereinstimmende Elemente sind mit denselben Bezugszeichen gekennzeichnet. Der grundlegende Unterschied zur dritten Ausführungsformen liegt darin, dass im radial verlaufenden Dichtspalt 106 eine berührungslose Labyrinthdichtung 114 vorhanden ist. Die Labyrinthdichtung 114 könnte alternativ (oder eine zusätzliche Labyrinthdichtung könnte) zwischen dem dritten Element 108 und der Fläche 110 angeordnet sein.

## Patentansprüche

1. Lageranordnung (34) eines Gutförder- und/oder Gutbearbeitungselements (30) für eine Erntemaschine (10), mit einer mit dem Gutförder- und/oder Gutbearbeitungselement (30) verbundenen, angetriebenen oder frei mitlaufenden Welle (36) und einem die Welle (36) am Fahrgestell (12) der Erntemaschine (10) abstützenden Lager (46), das durch eine berührungslose, ein Labyrinth bildende Dichtung (64) gegenüber dem vom Gutförder- und/oder Gutbearbeitungselement (30) geförderten und/oder bearbeiteten Erntegut abgeschirmt ist, wobei:
die Dichtung (64) ein erstes, sich mit der Welle (36) bewegendes Element (66) und ein zweites, mit dem Fahrgestell (12) der Erntemaschine (10) verbundenes Element (68) umfasst, deren einander benachbarte Flächen einen sich in axialer Richtung der Welle (38) orientierten, ersten Spalt (74) bilden, der ein dem Lager (46) zugewandtes, einlaufseitiges Ende (84) und ein vom Lager (46) beabstandetes Ende (82) aufweist,
das erste Element (66) das zweite Element (68) konzentrisch umschließt und an seiner dem Lager (46) zugewandten Stirnseite (102) mit einer das zweite Element (68) radial nach außen verlängernden Fläche (104) einen radial verlaufenden, zweiten Dichtspalt (106) einschließt, der sich an das einlaufseitige Ende (84) des Spalts (74) anschließt,
und radial außerhalb des radial verlaufenden, zweiten Dichtspalts (106) am zweiten Element (68) ein drittes, mit dem Fahrgestell (12) der Erntemaschine (10) verbundenes Element (108) angebracht ist, das sich an der Außenseite des ersten Elements (66) in axialer Richtung erstreckt,
**dadurch gekennzeichnet, dass** sich die dem ersten Element (66) zugewandte Fläche des dritten Elements (108) vom zweiten Dichtspalt (106) schräg nach außen erstreckt, und dass das dritte Element (108) mit einer parallel und ebenfalls schräg nach außen verlaufenden Fläche (110) des ersten Elements (66) einen weiteren berührungslosen Dichtspalt (112) bildet, der sich an den radial verlaufenden Dichtspalt (106) anschließt und schräg nach außen verläuft.

2. Lageranordnung (34) nach Anspruch 1, wobei sich zwischen der Welle (38) und dem zweiten Element (68) mindestens eine weitere Dichtung (86, 88, 90) befindet.

3. Lageranordnung (34) nach Anspruch 2, wobei die weitere Dichtung (86, 88, 90) mit flexiblen Dichtelementen ausgestattet ist.

4. Lageranordnung (34) nach einem der Ansprüche 1 bis 3, wobei das Lager (46) an der Außenseite einer mit einem Fahrgestell (12) verbundenen Wand (48) angeordnet ist, und die Dichtung (64) sich an der Innenseite der Wand (48) befindet.

5. Lageranordnung (34) nach einem der Ansprüche 1 bis 4, wobei das zweite Element (68) an seiner äußeren Fläche glatt ist.

6. Lageranordnung (34) nach einem der Ansprüche 1 bis 5, wobei das erste Element (66) innenseitig glatt ist.

7. Lageranordnung (34) nach einem der Ansprüche 1 bis 6, wobei das dritte Element (108) das erste Element (66) wenigstens über einen Teil der Länge des ersten Elements (66) radial umschließt, so dass sich ein bogenförmiger Einlauf des ersten Spalts (74) ergibt.

8. Lageranordnung (34) nach Anspruch 7, wobei zwischen der dem Lager (46) zugewandten Stirnseite (102) des ersten Elements (66) und der das zweite Element (68) radial nach außen verlängernden Fläche (104) eine berührungsfreie Labyrinthdichtung (114) angeordnet ist.

9. Kombination aus einer Lageranordnung (34) nach einem der Ansprüche 1 bis 8 und einem Gutförder- und/oder Gutbearbeitungselement (30) mit einem Mantel (38), der über eine Stützscheibe (40) mit der Welle (36) verbunden ist, wobei das zur Welle (36) konzentrische, erste Element (66) mit der Welle (36) verbunden ist und zwischen sich und der Welle (36) den ersten Spalt (74) definiert, die Welle (36) mit der Lageranordnung (34) verbunden oder verbindbar ist und das erste Element (66) zwischen dem zweiten Element (68) und dem dritten Element (108) angeordnet oder anordenbar ist.

10. Erntemaschine (10) mit einer Lageranordnung (34) nach einem der Ansprüche 1 bis 8.

## Claims

1. Bearing arrangement (34) of a crop conveying and/or crop processing element (30) for a harvester (10), having a driven or freely rotating shaft (36) which is connected to the crop conveying and/or crop processing element (30), and a bearing (46) which supports the shaft (36) on the chassis (12) of the harvester (10) and is shielded by way of a contactless seal (64) which forms a labyrinth from the harvested crop which is conveyed and/or processed by the crop conveying and/or crop processing element (30) : the seal (64) comprising a first element (66) which moves with the shaft (36) and a second element (68) which is connected to the chassis (12) of the harvester (10), the faces of which elements (66, 68), which adjoin one another, form a first gap (74) which is oriented in the axial direction of the shaft (38) and has an inlet-side end (84) which faces the bearing (46) and an end (82) which is spaced apart from the bearing (46), the first element (66) surrounding the second element (68) concentrically and, on its end side (102) which faces the bearing (46), enclosing a radially running, second sealing gap (106) with a face (104) which extends the second element (68) radially to the outside, which second sealing gap (106) adjoins the inlet-side end (84) of the gap (74), and a third element (108) which is connected to the chassis (12) of the harvester (10) being attached to the second element (68) radially outside the radially running, second sealing gap (106), which third element (108) extends in the axial direction on the outer side of the first element (66); **characterized in that** that face of the third element (108) which faces the first element (66) extends obliquely to the outside from the second sealing gap (106), and **in that** the third element (108) forms a further contactless sealing gap (112) with a face (110) of the first element (66), which face (110) runs in parallel and likewise obliquely to the outside, the said further sealing gap (112) adjoining the radially running sealing gap (106) and running obliquely to the outside.

2. Bearing arrangement (34) according to Claim 1, at least one further seal (86, 88, 90) being situated between the shaft (38) and the second element (68).

3. Bearing arrangement (34) according to Claim 2, the further seal (86, 88, 90) being equipped with flexible sealing elements.

4. Bearing arrangement (34) according to one of Claims 1 to 3, the bearing (46) being arranged on the outer side of a wall (48) which is connected to a chassis (12), and the seal (64) being situated on the inner side of the wall (48).

5. Bearing arrangement (34) according to one of Claims 1 to 4, the second element (68) being smooth on its outer face.

6. Bearing arrangement (34) according to one of Claims 1 to 5, the first element (66) being smooth on the inner side.

7. Bearing arrangement (34) according to one of Claims 1 to 6, the third element (108) surrounding the first element (66) radially at least over part of the length of the first element (66), which results in an arcuate inlet of the first gap (74).

8. Bearing arrangement (34) according to Claim 7, a contactless labyrinth seal (114) being arranged between that end side (102) of the first element (66) which faces the bearing (46) and the face (104) which extends the second element (68) radially to the outside.

9. Combination of a bearing arrangement (34) according to one of Claims 1 to 8 and a crop conveying and/or crop processing element (30) with a shell (38) which is connected to the shaft (36) via a supporting disc (40), the first element (66) which is concentric with respect to the shaft (36) being connected to the shaft (36) and defining the first gap (74) between itself and the shaft (36), the shaft (36) being connected or being capable of being connected to the bearing arrangement (34), and the first element (66) being arranged or being capable of being arranged between the second element (68) and the third element (108).

10. Harvester (10) having a bearing arrangement (34) according to one of Claims 1 to 8.

## Revendications

1. Ensemble à palier (34) d'un élément de transport de produits et/ou de traitement de produits (30) destiné à une récolteuse (10), l'ensemble à palier comprenant un arbre (36) tournant librement ou entraîné qui est relié à l'élément de transport de produits et/ou de traitement de produits (30) et un palier (46) qui supporte l'arbre (36) au niveau du châssis (12) de la récolteuse (10) qui est protégé par une garniture d'étanchéité en labyrinthe (64) sans contact contre le produit transporté et/ou traité par l'élément de transport de produits et/ou de traitement de produits (30),
la garniture d'étanchéité (64) comprenant un premier élément (66) se déplaçant avec l'arbre (36) et un deuxième élément (68) relié au châssis (12) de la récolteuse (10), dont les surfaces adjacentes forment un premier espace (74) orienté dans une direction axiale de l'arbre (38) orientée formant le (74), lequel espace comporte une extrémité côté entrée (84) dirigée vers le palier (46) et une extrémité (82) située à distance du palier (46),
le premier élément (66) entourant concentriquement le deuxième élément (68) et enfermant, sur son côté frontal (102) tourné vers le palier (46) et pourvu d'une surface (104) prolongeant le deuxième élément (68) radialement vers l'extérieur, un deuxième espace d'étanchéité (106) qui s'étend radialement et qui se raccorde à l'extrémité côté entrée (84) de l'espace (74),
et un troisième élément (108), qui est relié au châssis (12) de la récolteuse (10) et qui s'étend dans une direction axiale du côté extérieur du premier élément (66), étant monté sur le deuxième élément (68) radialement à l'extérieur du deuxième espace d'étanchéité (106) qui s'étend radialement,
**caractérisé en ce que** la surface, dirigée vers le premier élément (66), du troisième élément (108) s'étend obliquement vers l'extérieur depuis le deuxième espace d'étanchéité (106) et **en ce que** le troisième élément (108) forme avec une surface (110), s'étendant parallèlement et également obliquement vers l'extérieur, du premier élément (66) un autre espace d'étanchéité (112) sans contact qui se raccorde à l'espace d'étanchéité (106) s'étendant radialement et qui s'étend obliquement vers l'extérieur.

2. Ensemble à palier (34) selon la revendication 1, au moins une autre garniture d'étanchéité (86, 88, 90) étant située entre l'arbre (38) et le deuxième élément (68).

3. Ensemble à palier (34) selon la revendication 2, l'autre garniture d'étanchéité (86, 88, 90) étant équipée d'éléments d'étanchéité flexibles.

4. Ensemble à palier (34) selon l'une des revendications 1 à 3, le palier (46) étant disposé du côté extérieur d'une paroi (48) reliée à un châssis (12) et la garniture d'étanchéité (64) se trouvant du côté intérieur de la paroi (48).

5. Ensemble à palier (34) selon l'une des revendications 1 à 4, le deuxième élément (68) étant lisse sur sa surface extérieure.

6. Ensemble à palier (34) selon l'une des revendications 1 à 5, le premier élément (66) étant lisse du côté intérieur.

7. Ensemble à palier (34) selon l'une des revendications 1 à 6, le troisième élément (108) entourant radialement le premier élément (66) au moins sur une partie de la longueur du premier élément (66) de façon à obtenir une entrée incurvée du premier espace (74) .

8. Ensemble à palier (34) selon la revendication 7, une garniture d'étanchéité en labyrinthe (114) sans contact étant disposée entre le côté frontal (102), dirigé vers le palier (46), du premier élément (66) et la surface (104) prolongeant le deuxième élément (68) radialement vers l'extérieur.

9. Combinaison d'un ensemble à palier (34) selon l'une des revendications 1 à 8 et d'un élément de transport de produits et/ou de traitement de produits (30) avec une enveloppe (38) qui est reliée à l'arbre (36) par le biais d'une plaque de support (40), le premier élément (66) concentrique à l'arbre (36) étant relié à l'arbre (36) et définissant entre lui et l'arbre (36) le premier espace (74), l'arbre (36) étant relié ou pouvant être relié à l'ensemble à palier (34) et le premier élément (66) étant disposé ou pouvant être disposé entre le deuxième élément (68) et le troisième élément (108).

10. Récolteuse (10) équipée d'un ensemble à palier (34) selon l'une des revendications 1 à 8.
